# EUROPÄISCHE PATENTSCHRIFT

(11) **EP 0 873 831 B1**
(45) Veröffentlichungstag und Bekanntmachung des Hinweises auf die Patenterteilung: **02.08.2000**
(21) Anmeldenummer: 98106293.8
(22) Anmeldetag: 07.04.1998
(51) Int. Cl.: B28B 1/14, B23B 51/04

(54) **Bohrmaschine mit Hohlbohrer und Zentrierbohrer**
Power drill with core drill and centre drill
Perceuse avec forêt tubulaire et forêt centrage

(30) Priorität: 23.04.1997 DE 19717031
(43) Veröffentlichungstag der Anmeldung: 28.10.1998
(73) Patentinhaber: FRIEDRICH DUSS MASCHINENFABRIK GMBH & CO., D-75387 Neubulach (DE)
(72) Erfinder: Schroth, Gerhard, 75387 Neubulach (DE)
(74) Vertreter: Reinhardt, Harry

(56) Entgegenhaltungen:
- DE-A- 19 505 111

## Beschreibung

Die Erfindung betrifft eine Bohrmaschine, insbesondere zur Erzeugung von Ausnehmungen in Wänden zur Unterbringung von elektrischen Installationsdosen nach dem Oberbegriff des Anspruches 1.

In der Praxis tritt häufig das Problem auf, in Wänden Ausnehmungen zur Unterbringung von elektrischem Installationsmaterial wie z.B. von Schalterdosen und Schalterabzweigdosen anzubringen. Die Herstellung dieser Ausnehmungen erfolgt mittels Bohrmaschinen, die mit einer Diamantbohrkrone und einem Zentrierbohrer ausgestattet sind. Da beim schlagfreien Bohren der Bohrfortschritt durch den Zentrierbohrer sehr stark gehemmt wird, sind verschiedene Maßnahmen bekannt, durch die versucht wird, diesen Nachteil zu beheben:
a) die Zentrierbohrung wird mit einem Bohrhammer oder einer Schlagbohrmaschine separat hergestellt,
b) der Zentrierbohrer wird aus der Hohlbohrkrone komplett manuell entfernt wie z.B. gemäß EP 612 575 B1,
c) der Zentrierbohrer wird nach dem Zentriervorgang manuell zurückgezogen wie es z.B. aus dem dem Oberbegriff des Anspruches 1 zugrundeliegenden Prospekt der Firma Hawera 4/96 "Diamant-Bohrkronen" als Spezialaufnahmeschaft dargestellt ist. Es wird dort vorgeschlagen, den Zentrierbohrer in einer Hohlwelle axial beweglich zu führen, so daß nach dem Ansetzen des Zentrierbohrers und nach Beginn des Bohrvorgangs mit der Diamantbohrkrone der zu diesem Zeitpunkt dann störende Zentrierbohrer zurückgezogen werden kann. Bei diesem Spezialaufnahmeschaft erfolgt dies dadurch, daß der Zentrierbohrer über einen Handgriff in den Schaft zurückgezogen werden kann, wobei die Axialführung in ihrem vorderen Ende in einer Rastausnehmung endet, in der der Bohrer in seiner vordersten Stellung fixierbar ist. Ein zügiges Setzen der Ausnehmungen beim "Dosen senken" ist damit jedoch nicht möglich, da der Bohrvorgang unterbrochen werden muß, sobald die Bohrkrone im Mauerwerk einsetzt, um den Zentrierbohrer von Hand zurückzuziehen. Darüber hinaus erfordert die manuell zugängliche Führung einen Raumbedarf am Schaft der Diamantbohrkrone, der nicht zur Handlichkeit der gesamten Bohrvorrichtung beiträgt.

Ferner ist es z.B. aus der DE 40 20 242 C2 bekannt, die Hohlbohrkrone über eine Hohlwelle anzutreiben, innerhalb der ein Zentrierbohrer mittels eines Schlagwerks antreibbar ist, während die Hohlbohrkrone lediglich ohne Schlag bohrt. Dadurch kann auch der Zentrierbohrer während des gesamten Bohrvorgangs vorgetrieben werden, so daß ein Zurückziehen zwar nicht erforderlich ist, andererseits aber die Maschine in der Herstellung sehr teuer wird, da extra für den Zentrierbohrer ein Schlagwerk eingebaut werden muß. Außerdem kann eine solche Maschine nicht zum vibrationsfreien Bohren verwendet werden.

Ausgehend von diesem Stand der Technik liegt der vorliegenden Erfindung die Aufgabe zugrunde, bei einer Bohrmaschine auf materialschonende Weise ein "Dosen senken" durchzuführen, ohne den Bohrvorgang zu unterbrechen.

Diese Aufgabe wird durch eine Bohrmaschine mit den Merkmalen des Anspruches 1 gelöst.

Während also im Stand der Technik entweder bei einer Unterbrechung des Bohrvorgangs der Zentrierbohrer manuell zurückgezogen oder herausgenommen werden muß, oder der Zentrierbohrer ständig im Einsatz ist und dadurch abgenutzt wird, besteht nun die Möglichkeit, zunächst mit dem Zentrierbohrer anzubohren und dann den Zentrierbohrer aus dem ihn antreibenden Formschluß zu entriegeln, so daß nur noch die Bohrkrone in Eingriff ist. Die Entriegelung erfolgt dabei selbsttätig unter Überwindung eines vorbestimmten Anpreßdruckes. Sobald die Bedienungsperson also feststellt, daß eine kurze Zentrierbohrung z.B. bis zum Bund 10a der Zentrierspitze hergestellt ist, erhöht sie kurz den Anpreßdruck und schaltet dadurch den Zentrierbohrer wirkungslos.

Diese Maßnahme schont dabei nicht nur den Zentrierbohrer, sondern vermeidet auch das Losschlagen des gesamten Mauerwerks beim Dosen setzen, was insbesondere bei Einsatz eines Schlagwerkes geschehen kann. Gleichzeitig wird aber der Zentrierbohrer selbsttätig nach Abschluß des Bohrvorgangs wieder in seine Ausgangsstellung rückgeführt und trägt dabei sogar zum Auswurf des Bohrkerns bei. Da eine selbsttätige Rückstellung möglich ist, kann der gesamte Bohrer kompakter und die Bohrmaschine damit leichter hergestellt werden, was zugleich die Bedienungsfreundlichkeit des Geräts erhöht. Nicht zuletzt kann durch eine derartige Bohrmaschine die je Dose erforderliche Zeit zum Herstellen der Ausnehmung reduziert werden.

Eine Ausgestaltung nach den Ansprüchen 5 bis 13 ermöglicht auf einfache Weise die selbsttätige Rückführung des Zentrierbohrers in seine Ausgangsstellung, sobald der Bohrvorgang abgeschlossen ist. Das Problem war hier bisher, daß dann, wenn der Bohrvorgang nicht unterbrochen werden soll und der Zentrierbohrer dennoch einen entsprechenden Bohrvortrieb zu Beginn des Bohrvorgangs erbringen soll, die Überwindung einer vorgegebenen Kraft erforderlich war. Wenn jedoch diese vorgegebene Kraft zum Ausrasten des Zentrierbohrers aufgebracht wird, so muß sie grundsätzlich auch beim Zurückführen des Zentrierbohrers in seine Ausgangsstellung aufgebracht werden, so daß der Zentrierbohrer nicht von selbst, d.h. ohne einen Eingriff von außen, wieder in seine Ausgangsstellung gebracht werden konnte. Dadurch, daß nun die Kupplungselemente bei der Überführungsbewegung in die entriegelte und in die verriegelte Stellung, also in die zurückgezogene und aus der zurückgezogenen Stellung des Zentrierbohrers verschiedene Bewegungsbahnen oder Laufbahnen zurücklegen, kann dies dahingehend beeinflußt werden, daß zwar beim Entriegeln des Zentrierbohrers eine vorbestimmte Kraft aufgebracht werden muß, dies jedoch nicht für die Rückführung erforderlich ist, so daß die Axialfeder, die beim Zurückschieben des Zentrierbohrers gespannt wird, allein in der Lage ist, den Zentrierbohrer in seine Ausgangsstellung zurückzuführen.

Im folgenden wird die Erfindung anhand eines in den Zeichnungen dargestellten Ausführungsbeispiels näher erläutert. Es zeigen:
- Fig. 1: Eine teilweise geschnittene Seitenansicht einer Bohrmaschine mit einem in Bohrstellung befindlichen Zentrierbohrer,
- Fig. 2: eine Darstellung gemäß Fig. 1 mit einem zurückgezogenen Zentrierbohrer,
- Fig. 3: einen vergrößerten Ausschnitt aus Fig. 1 im Bereich des Verriegelungsmechanismus,
- Fig. 4: einen Schnitt nach Linie 4-4 von Fig. 3,
- Fig. 5: eine Abwicklung entlang der Zentrierbohreraufnahme im Bereich des Verriegelungsmechanismus,
- Fig. 6: eine Ansicht von Kupplungselementen und Zentrierbohreraufnahme im Bereich des Verriegelungsmechanismus.

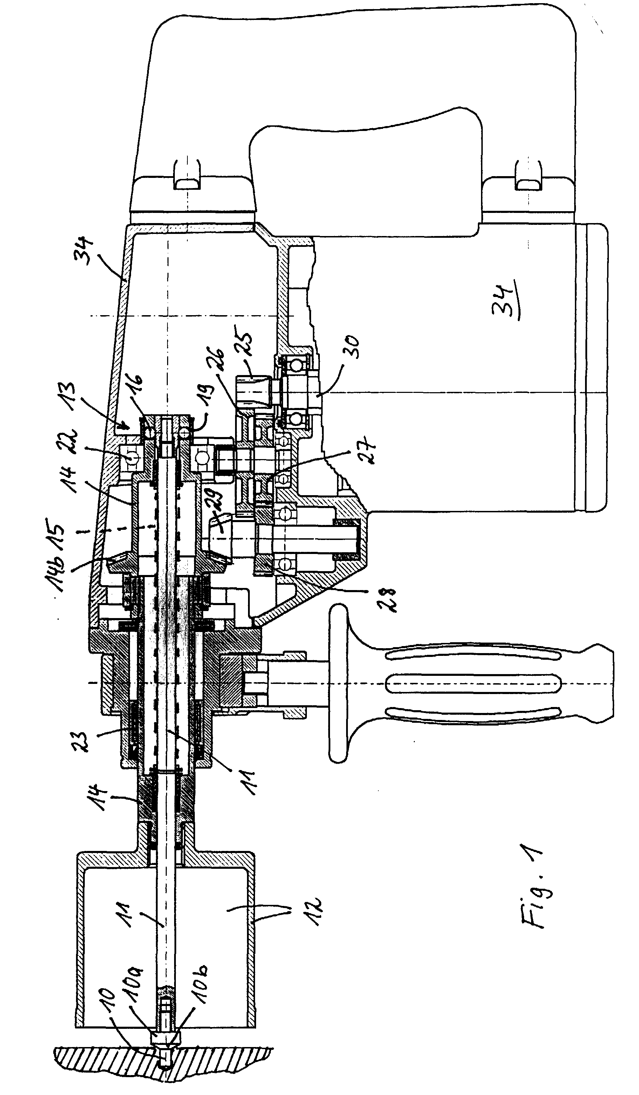

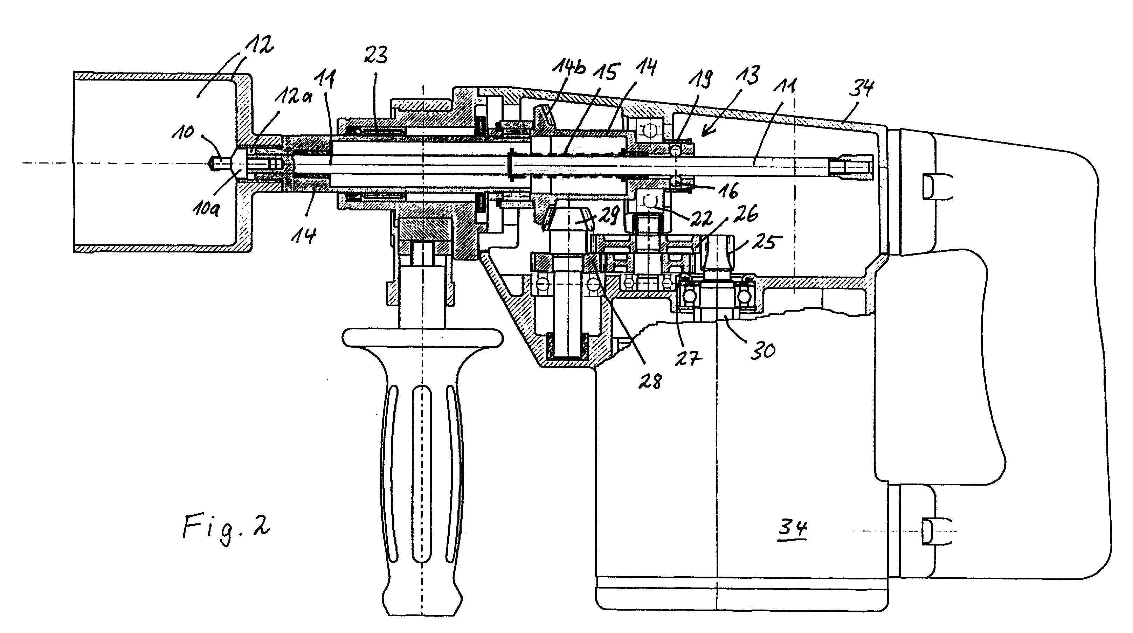

In den Figuren ist eine Bohrmaschine insbesondere zur Erzeugung von Ausnehmungen in Wänden zur Unterbringung von elektrischen Installationsdosen dargestellt, die vorzugsweise im Baubereich durch Heim- und Handwerker eingesetzt wird. Gemäß Fig. 1 handelt es sich dabei um eine elektrisch angetriebene Bohrmaschine, wobei über eine Antriebswelle 30 und mehrere Zahnräder 25,26,27,28,29 eine Kegelverzahnung 14b einer Hohlwelle 14 zur Rotation der Hohlwelle angetrieben wird. Am vorderen Ende der Hohlwelle 14 ist eine Hohlbohrkrone 12 festlegbar, deren äußerer Umfang den Durchmesser der herzustellenden Ausnehmung beschreibt. Konzentrisch zur Hohlbohrkrone 12 liegt ein Zentrierbohrer 10, der in Fig. 1 in seiner vordersten Stellung und in Fig. 2 in seiner rückwärtigen Stellung dargestellt ist. In seiner rückwärtigen oder zurückgezogenen Stellung kommt der Zentrierbohrer 10 in einer Ausnehmung 12a zu liegen, wobei seine hinterste Stellung durch das vordere Ende der Hohlwelle 14 bestimmt wird. Der Zentrierbohrer 10 weist einen Bund 10a auf, dessen Anlauffläche 10b als Kegel ausgebildet ist.

Um den Bohrvorgang durch den Zentrierbohrer zu ermöglichen, ist dieser in der Stellung gemäß Fig. 1 mit dem Rotationsantrieb und insofern mit der Hohlwelle 14 beim Anbohren gekuppelt. In dieser mit dem Bohrantrieb verriegelten Stellung ermöglicht er das maßgenaue Anbohren der Ausnehmung. Sobald die erforderliche Tiefe der Zentrierbohrung, die begrenzt ist durch den Bund 10a des Zentrierbohrers 10, erreicht wird, ist der Zentrierbohrer in eine entriegelte Stellung überführbar, in der der Zentrierbohrer 10 in die Hohlbohrkrone 12 bis zu seiner in Fig. 2 dargestellten rückwärtigen Stellung zurücktritt. Die kegelförmige Anlauffläche 10b zentriert dabei zugleich den Zentrierbohrer. Die Hohlwelle 14 nimmt den Zentrierbohrer 10 im wesentlichen in der entriegelten, zurückgezogenen Stellung auf. Eine Rückstelleinrichtung ist zum Rückstellen des Zentrierbohrers aus der entriegelten Stellung in die verriegelte Stellung vorgesehen.

Der Zentrierbohrer 10 gelangt in die entriegelte Stellung unter Überwindung eines vorbestimmten Anpreßdruckes und gegen die Kraft eines Rückstellmittels 15 der Rückstelleinrichtung, das im konkreten Ausführungsbeispiel eine Axialfeder ist. Sowohl die Überführungsbewegung in die entriegelte Stellung als auch die Überführung aus der entriegelten Stellung erfolgt selbsttätig, wobei das Rückstellmittel 15 den Zentrierbohrer 10 wieder in die verriegelte Stellung überführt, sobald der Bohrvorgang beendet ist. Die Kraft der Axialfeder 15 kann zugleich auch den Bohrkern aus der Hohlbohrkrone ausstoßen. Die Axialfeder ist einenends an der Hohlwelle 14 und anderenends an einer Zentrierbohreraufnahme 11 für den Zentrierbohrer abgestützt. Es versteht sich von selbst, daß auch andere elastische Mittel vorgesehen sein können, sofern diese als Rückstellmittel geeignet sind, wobei beliebige Anordnungsmöglichkeiten möglich sind, sofern dadurch die Rückstellung des Zentrierbohrers 10 gewährleistet ist.

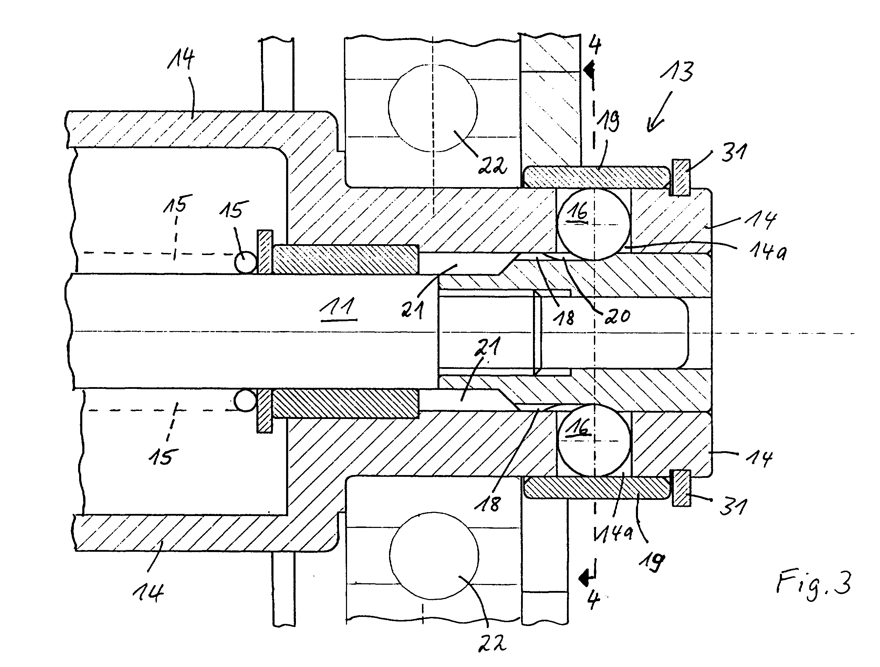

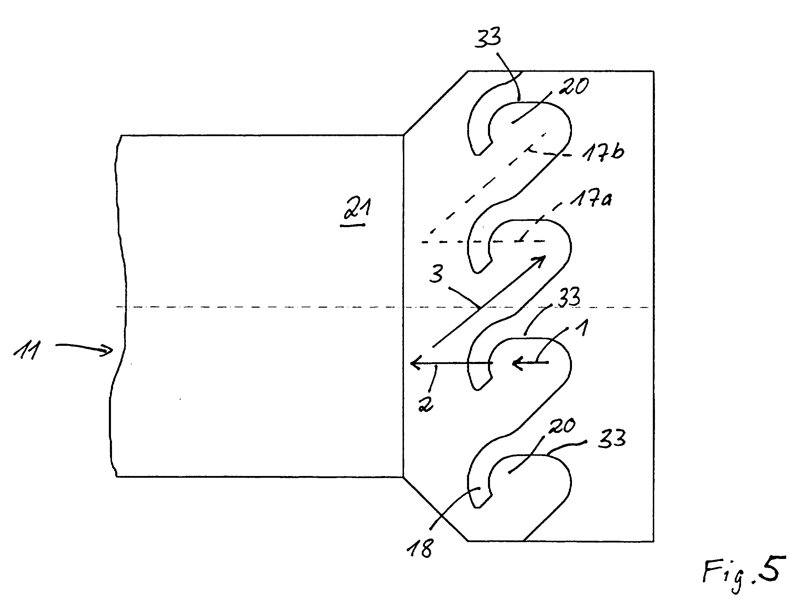

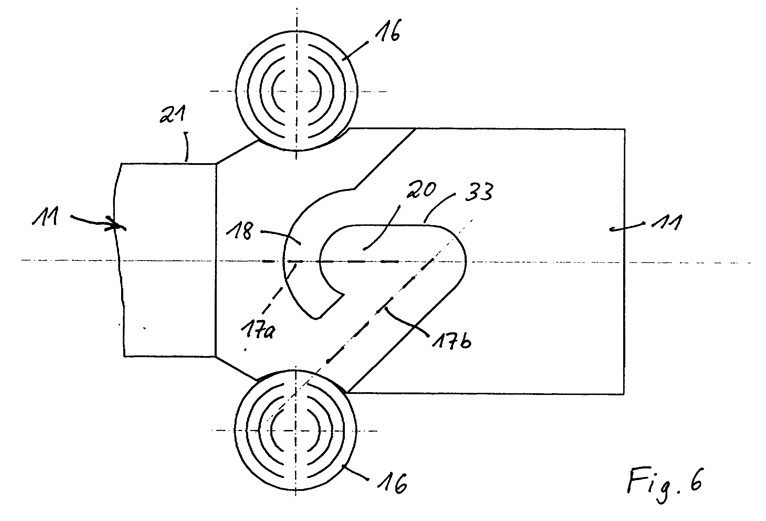

Gemäß Fig. 3 besitzt der Verriegelungsmechanismus 13 mehrere Kupplungselemente 16, die im Ausführungsbeispiel kugelförmig sind. Bei der Überführungsbewegung des Zentrierbohrers 10 werden diese Kupplungselemente entlang von Laufbahnen 17a,17b radial begrenzt bewegt. Bei der Überführung des Zentrierbohrers 10 aus der verriegelten Stellung in die entriegelte Stellung ist die Laufbahn 17a so ausgebildet, daß die Kupplungselemente über eine Schwelle 18, die am deutlichsten in Fig. 5 und 6 erkennbar ist, bewegt werden müssen. Dabei werden sie gegenüber der verriegelten Stellung, die in Fig. 5 am weitesten rechts dargestellt ist, zur Erzeugung des vorbestimmten Anpreßdruckes radial nach außen gezwungen. Die Bedienungsperson bohrt also mit dem Zentrierbohrer vor und erhöht kurzzeitig den Anpreßdruck, sobald der Bund 10a des Zentrierbohrers 10 das Gestein erreicht, um dadurch die Kupplungselemente 16 über die Schwelle 18 zu zwingen und die Hohlbohrkrone 12 in Anlage am Mauerwerk zu bringen. Die radial nach außen erfolgende Bewegung der Kupplungselemente 16 erfolgt dabei gegen die Kraft des Federrings 19, dessen Federkraft insofern also auch den Anpreßdruck bestimmt. Statt des Federrings 19 kann auch jedes andere elastische Mittel vorgesehen werden, um die radiale Beweglichkeit der kugelförmigen Kupplungselemente 16 zu begrenzen. Der Federring 19 ist durch den Sicherungsring 31 an der Hohlwelle in axialer Richtung fixiert. An der Hohlwelle 14 selbst ist der geschlitzte Federring 19 über eine Drehsicherung 32 festgelegt, so daß der Federring 19 grundsätzlich mit der Hohlwelle 14 rotieren kann. Die Hohlwelle 14 selbst ist in Wälzlagern 22,23 gelagert und in ihrer Position am Gehäuse 34 festgelegt. Das Rückstellmittel 15 in Form der Axialfeder führt die Kupplungselemente 16 entlang der Laufbahn 17b (Fig. 5, Fig. 6) aus der entriegelten Stellung in die verriegelte Stellung des Zentrierbohrers zurück, wobei die Kupplungselemente 16 in ihrer radial äußersten Lage während dieser Bewegung durch den im wesentlichen unverformten Federring 19 begrenzt sind. Während somit also beim Überführen in die entriegelte Stellung die Schwelle 18 und damit ein Anpreßdruck, hervorgerufen durch den Federring 19, überwunden werden muß, ist beim Rückstellen in die verriegelte Stellung keine zusätzliche Kraft zu überwinden, so daß die Axialfeder 15 die Rückstellung bewerkstelligen kann.

Im unbelasteten Zustand, also vor Anlegen des Zentrierbohrers, befinden sich die Kupplungselemente 16 in der verriegelten Stellung des Zentrierbohrers in Rastmulden 20 der Zentrierbohreraufnahme 11. Beim Ansetzen des Bohrers ergibt sich eine axiale Bewegung, die in Fig. 5 durch den Pfeil 1 dargestellt ist. Dadurch kommen die Kupplungselemente in Anlage an der Schwelle 18. Gleichzeitig werden die Rastmulden 20 nicht nur in axialer Richtung nach vorne durch die halbkreisförmigen Schwellen 18 begrenzt, sondern auch in der beim Bohren eintretenden Rotationsrichtung durch radiale Vorsprünge 33 an der Zentrierbohreraufnahme, so daß die Kupplungselemente beim Ansetzen der Bohrmaschine stets, also selbst wenn der Bohrer bereits vor dem Ansetzen in Rotation versetzt wird, in der Rastmulde 20 an der Schwelle 18 zur Anlage kommen und insofern der Laufbahn 17a folgen. Die halbkreisförmige Ausgestaltung der Schwelle verhindert zudem, daß das Kupplungselement den an sich leichteren Weg entgegen der Laufrichtung der Laufbahn 17b wählt.

Wird jetzt der vorbestimmte Anpreßdruck aufgebracht, so wird das Kupplungselement entlang des Pfeiles 2 über die Schwelle 18 hinweg in einen Bereich 21 reduzierten Durchmessers an der Zentrierbohraufnahme 11 verbracht. In dieser Stellung sind die Kupplungselemente nicht mehr wie in der Rastmulde 20 mit der Zentrierbohreraufnahme in Wirkverbindung, so daß keine Rotation mehr auf die Zentrierbohreraufnahme übertragen wird, der Zentrierbohrer 10 also lediglich unter der Kraft der Axialfeder am üblicherweise feststehenden Bohrkern ohne Relativbewegung zu diesem bzw. Rotation anliegt. Die Kupplungselemente 16 rollen dabei auf dem Bereich 21 reduzierten Durchmessers ab, wobei Fig. 2 verdeutlicht, daß sich die Kupplungselemente über einen längeren Bereich entlang der Zentrierbohreraufnahme bewegen können, der in seiner maximalen Länge im wesentlichen durch die Länge der Hohlbohrkrone 12 bestimmt ist.

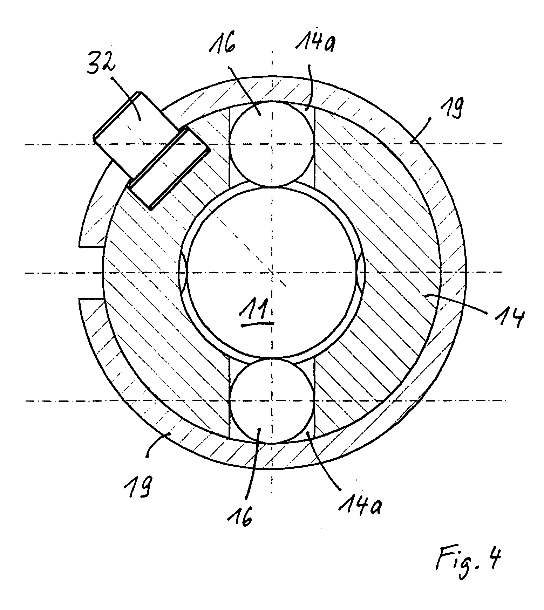

Die Kupplungselemente 16 sind grundsätzlich in axialer Richtung als auch in Umfangsrichtung gemäß Fig. 3 und 4 in Ausnehmungen 14a der Hohlwelle 14 wie in einem Käfig radial beweglich geführt. Da die Hohlwelle sich zudem beim gesamten Bohrvorgang axial nicht bewegt, bleiben auch die kugelförmigen Kupplungselemente 16 in axialer Richtung an ihrer Stelle.

Die Rastmulden 20 und die Schwelle 18 sind Teil der Laufbahn 17a für die Kupplungselemente 16 bei der Überführung des Zentrierbohrers 10 aus der verriegelten Stellung in die entriegelte Stellung. Wie die Abwicklung gemäß Fig. 5 verdeutlicht, sind die Rastmulden 20 am Umfang der Zentrierbohreraufnahme 11 voneinander durch die Laufbahn 17b beabstandet angeordnet, entlang der die Kupplungselemente 16 bei der Überführung aus der entriegelten Stellung in die verriegelte Stellung entlang des Pfeiles 3 in Fig. 5 bewegbar sind. Da sich die Kupplungselemente stets - sofern sie daran nicht durch die halbkreisförmige Schwelle 18 oder den radialen Vorsprung 33 gehindert werden - den einfachsten Bewegungsweg wählen, bewegen sich die Kupplungselemente 16 entlang des Pfeiles 3 und der Laufbahn 17b in die verriegelte Stellung, ohne daß dabei die Schwelle 18 wiederum überwunden werden muß. Damit ist zwar ein Anpreßdruck erforderlich, um die Kupplungselemente in die entriegelte Stellung zu bringen, nicht jedoch, um den Zentrierbohrer wieder zu verriegeln. Die halbkreisförmige Ausgestaltung der Schwelle 18 sorgt vielmehr dafür, daß die Kupplungselemente der Laufbahn 17b folgen.

## Patentansprüche

1. Bohrmaschine, insbesondere zur Erzeugung von Ausnehmungen in Wänden zur Unterbringung von elektrischen Installationsdosen mit
- einem Zentrierbohrer (10),
- einer konzentrisch zum Zentrierbohrer (10) liegenden Hohlbohrkrone (12),
- einem Verriegelungsmechanismus (13), der den Zentrierbohrer (10) beim Anbohren in einer verriegelten Stellung hält, wobei zum Bohren mit der Hohlbohrkrone der Zentrierbohrer (10) in eine entriegelte Stellung überführbar ist, in der der Zentrierbohrer (10) in die Hohlbohrkrone (12) zurücktritt,
- einer Hohlwelle (14) zur Aufnahme des Zentrierbohrers (10) zumindest in der entriegelten Stellung,
- einer Rückstelleinrichtung zum Rückstellen des Zentrierbohrers (10) aus der entriegelten Stellung in die verriegelte Stellung,
dadurch gekennzeichnet, daß der Zentrierbohrer (10) unter Überwindung eines vorbestimmten Anpreßdruckes gegen die Kraft eines Rückstellmittels (15) der Rückstelleinrichtung in die entriegelte Stellung selbsttätig überführbar ist, wobei das Rückstellmittel (15) den Zentrierbohrer (10) wieder in die verriegelte Stellung führt, sobald der Bohrvorgang beendet ist.

2. Bohrmaschine nach Anspruch 1, dadurch gekennzeichnet, daß das Rückstellmittel (15) eine Axialfeder ist, die einenends an der Hohlwelle (14) und andernends an einer Zentrierbohreraufnahme (11) für den Zentrierbohrer abgestützt ist.

3. Bohrmaschine nach Anspruch 1 oder 2, dadurch gekennzeichnet, daß der Verriegelungsmechanismus (13) mehrere Kupplungselemente (16) aufweist, die bei der Überführungsbewegung des Zentrierbohrers (10) in und aus der entriegelten Stellung entlang einer Laufbahn (17a,17b) auf der Zentrierbohreraufnahme (11) radial begrenzt beweglich sind.

4. Bohrmaschine nach Anspruch 3, dadurch gekennzeichnet, daß die Laufbahn (17a) die Kupplungselemente (16) bei der Überführung des Zentrierbohrers (10) aus der verriegelten Stellung in die entriegelte riegelte Stellung mittels einer Schwelle (18) gegenüber der verriegelten Stellung zur Erzeugung des vorbestimmten Anpreßdrucks radial nach außen zwingt.

5. Bohrmaschine nach einem der vorhergehenden Ansprüche, dadurch gekennzeichnet, daß die kugelförmigen Kupplungselemente (16) bei der Überführung des Zentrierbohrers (10) aus der verriegelten Stellung in die entriegelte Stellung gegen ein den vorbestimmten Anpreßdruck bestimmendes elastisches Mittel radial beweglich sind.

6. Bohrmaschine nach Anspruch 5, dadurch gekennzeichnet, daß das elastische Mittel ein geschlitzter, an der Hohlwelle (14) festgelegter Federring (19) ist, der die Beweglichkeit der Kupplungselemente (16) radial nach außen begrenzt.

7. Bohrmaschine nach einem der vorhergehenden Ansprüche, dadurch gekennzeichnet, daß das Rückstellmittel (15) die Kupplungselemente (16) entlang der Laufbahn (17b) aus der entriegelten Stellung in die verriegelte Stellung des Zentrierbohrers zurückführt, wobei die Kupplungselemente (16) in ihrer bei dieser Bewegung radial äußersten Lage durch den im wesentlichen unverformten Federring (19) begrenzt sind.

8. Bohrmaschine nach einem der vorhergehenden Ansprüche, dadurch gekennzeichnet, daß die Kupplungselemente (16) in der verriegelten Stellung in Rastmulden (20) der Zentrierbohreraufnahme (11) liegen, die radial weiter außen liegend angeordnet sind als ein im Durchmesser reduzierter Bereich (21) der Zentrierbohreraufnahme (11), in der die Kupplungselemente (16) in der entriegelten Stellung zu liegen kommen.

9. Bohrmaschine nach einem der vorhergehenden Ansprüche, dadurch gekennzeichnet, daß die Kupplungselemente in axialer Richtung als auch in Umfangsrichtung in Ausnehmungen (14a) der Hohlwelle (14) wie in einem Käfig radial beweglich geführt sind.

10. Bohrmaschine nach Anspruch 8 oder 9, dadurch gekennzeichnet, daß die Rastmulden (20) in axialer Richtung nach vorne durch die halbkreisförmigen Schwellen (18) und in Rotationsrichtung durch einen radialen Vorsprung (33) der Zentrierbohreraufnahme (11) auf einer Seite der Laufbahn (17a) begrenzt sind.

11. Bohrmaschine nach einem der Ansprüche 8 bis 10, dadurch gekennzeichnet, daß Rastmulden (20) und Schwellen (18) Teil der Laufbahn (17a) für die Kupplungselemente (16) bei der Überführung des Zentrierbohrers (10) aus der verriegelten Stellung in die entriegelte Stellung sind, und daß die Rastmulden (20) am Umfang der Zentrierbohreraufnahme (11) untereinander durch Laufbahnen (17b) voneinander getrennt sind, entlang derer die Kupplungselemente (16) bei der Überführung aus der entriegelten Stellung in die verriegelte Stellung bewegbar sind.

12. Bohrmaschine nach einem der vorhergehenden Ansprüche, dadurch gekennzeichnet, daß der Zentrierbohrer (10) einen Bund (10a) aufweist.

13. Bohrmaschine nach Anspruch 12, dadurch gekennzeichnet, daß die Anlauffläche (10b) des Bundes (10a) als Kegel ausgebildet ist.

## Claims

1. Drilling machine, especially for generating recesses in walls for installation of casings for electrical installations, with:
- a centre drill (10),
- a hollow drill bit (12) being concentrically to the centre drill (10),
- a locking mechanism (13), which holds the centre drill (10) in a locked position during the spot drilling, whereas for drilling with the hollow drill bit the centre drill (10) is transferable in an unlocked position, in which the centre drill is moved back in the hollow drill bit (12),
- a hollow shaft (14) for receiving the centre drill (10) at least in the unlocked position,
- a reset device for resetting the centre drill (10) from the unlocked position to the locked position,
characterised in that the centre drill (10) is self-actingly transferable under override of a predetermined contact pressure against the force of a reset means (15) of the reset device to the unlocked position, whereas the reset device (15) guides the centre drill in the locked position, as soon as the drilling process is finished.

2. Drilling machine as set forth in claim 1, characterised in that the reset device (15) is an axial spring, which is propped at one end at the hollow shaft (14) and at a centre drill holder (11) for the centre drill at the other end.

3. Drilling machine as set forth in claim 1 or 2, characterised in that the locking mechanism (13) comprises a plurality of coupling elements (16), which are radially limited movable along a runway (17a, 17b) on the centre drill holder (11) during the transfer movement of the centre drill (10).

4. Drilling machine as set forth in claim 3, characterised in that the runway (17a) forces the coupling elements (16) radially outwards by means of a sleeper (18) during the transfer of the centre drill (10) from the locked position to the unlocked position in order to generate the predetermined contact pressure.

5. Drilling machine as set forth in one of the foregoing claims, characterised in that the spherical coupling elements (16) are radially movable against elastic means determining the predetermined contact force during the transfer of the centre drill from the locked position to the unlocked position.

6. Drilling machine as set forth in claim 5, characterised in that the elastical means is a notched lock washer (19) mounted on the hollow shaft, that limits the movability of the coupling elements (16) radially outwardly.

7. Drilling machine as set forth in one of the foregoing claims, characterised in that the reset means (15) resets the coupling elements (16) along the runway (17b) from the unlocked position to the locked position of the centre drill, whereas the coupling elements (16) are limited in their during that movement radially outermost position by the basically undeformed lock washer (19).

8. Drilling machine as set forth in one of the foregoing claims, characterised in that in the locked position the coupling elements (16) are resting in dwell troughs (20) of the centre drill holder (11), whereas the dwell troughs (20) are positioned radially more outwardly as a portion (21) reduced in diameter of the centre drill holder (11), in which the coupling elements (16) come to rest in the unlocked position.

9. Drilling machine as set forth in one of the foregoing claims, characterised in that the coupling elements are guided radially movable in axial direction and in peripheral direction in recesses (14a) of the hollow shaft (14) as in a cage.

10. Drilling machine as set forth in claim 8 or 9, characterised in that the dwell troughs (20) are limited in axial direction forwardly by the semicircular sleepers (18) and in the rotational direction by a radial nose (33) of the centre drill holder (11) on one side of the runway (17a).

11. Drilling machine as set forth in one of the claims 8 to 10, characterised in that the dwell troughs (20) and sleepers (18) are a part of the runway (17a) for the coupling elements (16) during the transfer of the centre drill (10) from the locked position to the unlocked position, and the dwell toughs (20) are separated from each other at the periphery of the centre drill holder by runways (17b), along those the coupling elements (16) are movable during the transfer from the unlocked position to the locked position.

12. Drilling machine as set forth in one of the foregoing claims, characterised in that the centre drill (10) comprises a flange (10a).

13. Drilling machine as set forth in claim 12, characterised in that the contact surface (10b) of the flange (10a) is built as a cone.

## Revendications

1. Perceuse, en particulier pour la production d'évidements dans des murs pour le logement de boîtes d'installation électriques, comprenant
- un foret à centrer (10),
- une couronne de perçage creuse (12) concentrique avec le foret à centrer (10),
- un mécanisme de verrouillage (13) qui, lors de l'amorçage, maintient le foret à centrer (10) dans une position verrouillée, le foret à centrer (10) pouvant, pour le perçage avec la couronne de perçage creuse, être mis dans une position déverrouillée dans laquelle il rentre dans la couronne de perçage creuse (12),
- un arbre creux (14) destiné à recevoir le foret à centrer (10) au moins dans sa position verrouillée,
- un dispositif de rappel du foret à centrer (10) de sa position déverrouillée à sa position verrouillée, caractérisée par le fait que le foret à centrer (10) peut être mis automatiquement en position déverrouillée en vainquant une pression de serrage déterminée contre la force d'un moyen de rappel (15) du dispositif de rappel, le moyen de rappel (15) ramenant le foret à centrer (10) en position verrouillée dès que l'opération de perçage est terminée.

2. Perceuse selon la revendication 1, caractérisée par le fait que le moyen de rappel (15) est un ressort axial qui s'appuie à une extrémité sur l'arbre creux (14) et à l'autre extrémité sur un récepteur (11) pour le foret à centrer.

3. Perceuse selon l'une des revendications 1 et 2, caractérisée par le fait que le mécanisme de verrouillage (13) présente plusieurs éléments d'accouplement (16) qui, lorsque le foret à centrer (10) gagne ou quitte sa position déverrouillée, sont mobiles de manière limitée radialement sur le logement de foret à centrer (11) le long d'un chemin de roulement (17a, 17b).

4. Perceuse selon la revendication 3, caractérisée par le fait que lors du passage du foret à centrer (10) de sa position verrouillée à sa position déverrouillée, le chemin de roulement (17a) contraint les éléments d'accouplement (16) radialement vers l'extérieur au moyen d'un seuil (18) vis-à-vis de la position verrouillée pour la production de la pression de serrage déterminée.

5. Perceuse selon l'une des revendications précédentes, caractérisée par le fait que lors du passage du foret à centrer (10) de sa position verrouillée à sa position déverrouillée, les éléments d'accouplement, sphériques (16) sont mobiles radialement contre l'action d'un moyen élastique qui détermine la pression de serrage déterminée.

6. Perceuse selon la revendication 5, caractérisée par le fait que le moyen élastique est un anneau élastique fendu (19) qui est fixé à l'arbre creux (14) et limite radialement vers l'extérieur la mobilité des éléments d'accouplement (16).

7. Perceuse selon l'une des revendications précédentes, caractérisée par le fait que le moyen de rappel (15) ramène les éléments d'accouplement (16) de la position déverrouillée à la position verrouillée du foret à centrer le long du chemin de roulement (17b), la position extrême radialement, lors de ce mouvement, des éléments d'accouplement (16) étant limitée par l'anneau élastique (19) pratiquement non déformé.

8. Perceuse selon l'une des revendications précédentes, caractérisée par le fait que dans la position verrouillée, les éléments d'accouplement (16) se trouvent dans des creux d'encliquetage (20) du récepteur de foret à centrer (11) qui sont placés plus à l'extérieur radialement qu'une partie de diamètre réduit (21) du récepteur de foret à centrer (11), dans lequel les éléments d'accouplement (16) viennent se placer dans la position déverrouillée.

9. Perceuse selon l'une des revendications précédentes, caractérisée par le fait que les éléments d'accouplement sont guidés mobiles radialement dans la direction axiale et dans la direction circonférentielle dans des évidements (14a) de l'arbre creux (14) comme dans une cage.

10. Perceuse selon l'une des revendications 8 et 9, caractérisée par le fait que les creux d'encliquetage (20) sont limités dans la direction axiale vers l'avant par les seuils semi-circulaires (18) et dans la direction de rotation par une saillie radiale (33) du récepteur de foret à centrer (11) sur un côté du chemin de roulement (17a).

11. Perceuse selon l'une des revendications 8 à 10, caractérisée par le fait que lors du passage du foret à centrer (10) de sa position verrouillée à sa position déverrouillée, les creux d'encliquetage (20) et les seuils (18) font partie du chemin de roulement (17a) pour les éléments d'accouplement (16), et que les creux d'encliquetage (20), sur le pourtour du récepteur de foret à centrer (11), sont séparés les uns des autres par des chemins de roulement (17b) le long desquels les éléments d'accouplement (16) sont mobiles lors du passage de la position déverrouillée à la position verrouillée.

12. Perceuse selon l'une des revendications précédentes, caractérisée par le fait que le foret à centrer (10) présente un collet (10a).

13. Perceuse selon la revendication 12, caractérisée par le fait que la surface portante (10b) du collet (10a) est conique.
